# EUROPÄISCHE PATENTSCHRIFT

(11) **EP 2 117 361 B1**
(45) Veröffentlichungstag und Bekanntmachung des Hinweises auf die Patenterteilung: **24.06.2015**
(21) Anmeldenummer: 08701074.0
(22) Anmeldetag: 11.01.2008
(51) Int. Cl.: A23L 3/04, A23L 3/00

(54) **VERFAHREN ZUR REDUZIERUNG DES ENERGIEBEDARFS BEI PASTEURISIERANLAGEN SOWIE FÜLLANLAGE**
METHOD FOR REDUCING POWER CONSUMPTION IN PASTEURIZING PLANTS, AND FILLING STATION
PROCÉDÉ DE RÉDUCTION DE LA CONSOMMATION D'ÉNERGIE DANS DES USINES DE PASTEURISATION, ET INSTALLATION DE REMPLISSAGE

(30) Priorität: 09.02.2007 DE 102007006519
(43) Veröffentlichungstag der Anmeldung: 18.11.2009
(73) Patentinhaber: KHS GmbH, 44143 Dortmund (DE)
(72) Erfinder: RATKE, André, 45731 Waltrop (DE)
(86) Internationale Anmeldenummer: PCT/EP2008/000158
(87) Internationale Veröffentlichungsnummer: WO 2008/095576

(56) Entgegenhaltungen:
- EP-A- 1 529 448
- GB-A- 363 033
- US-A1- 2002 073 652
- US-B1- 6 374 575

## Beschreibung

Die Erfindung bezieht sich auf ein Verfahren gemäß Oberbegriff Patentanspruch 1 sowie auf eine Füllanlage gemäß Oberbegriff Patentanspruch 12.

U. a. in der Getränkeindustrie ist es speziell bei leicht verderblichen Produkten üblich, diese In sogenannten Pasteurisieranlagen zu pasteurisieren. Bei bekannten Anlagen dieser Art werden die mit dem jeweiligen Produkt bzw. Füllgut gefüllten und verschlossenen Behälter mit Hilfe eines geeigneten Transportsystems durch Behandlungsabschnitte bzw. durch diese Abschnitte bildende Behandlungszonen bewegt und hierbei aufgeheizt, bis das jeweilige Produkt die erforderlichen Pasteurislerungseinheiten aufgenommen hat, d.h. der erforderliche Pasteurisierungsgrad erreicht ist. Im Anschluss daran, wird jeder Behälter und damit das in diesem enthaltene Produkt zur Beendigung des Pasteurisierungsvorgangs abgekühlt.

Eine für diesen Zweck als Pasteurisierungstunnel ausgebildete Pasteurisierungsanlage besteht demzufolge in der Regel aus wenigstens drei Abschnitten, nämlich aus einem Aufheizabschnitt, aus einem Überhitzungs- oder Pasteurisierungsabschnitt und aus einem anschließenden Kühlabschnitt, durch die die Behälter In einer Transportrichtung hindurch bewegt werden. Um u.a. ein die Behälter schonendes allmähliches Aufheizen und Abkühlen zu erreichen und damit die Gefahr einer Zerstörung der Behälter durch abrupte Temperaturänderungen zu vermeiden, sind zumindest der Aufheizabschnitt und der Abkühlabschnitt in der Regel von mehreren in Transportrichtung aneinander anschließenden Behandlungszonen gebildet, in denen ein stufenweises Aufheizen bzw. Abkühlen erreicht wird. Um hierbei eine optimale Temperaturabstufung zu erzielen, weist der Aufheizbereich beispielsweise drei bis vier Behandlungszonen mit stufenförmig ansteigender Temperatur und der Abkühlbereich ebenfalls drei bis vier Behandlungszonen mit stufenförmig abnehmender Temperatur auf. Auch der Überhitzungs- bzw. Sterilisationsabschnitt ist beispielsweise in mehrere Zonen unterteilt, z.B. ebenfalls in drei bis vier Zonen.

Das Erwärmen der Behälter und damit des in diesen enthaltenen Produktes erfolgt im Aufheizabschnitt sowie im Überhitzungs- oder Sterilisationsabschnitt bzw. in den einzelnen Zonen dieser Abschnitte bei bekannten Pasteurisieranlagen jeweils durch Besprühen der Behälter mit einer erhitzten Sprühflüssigkeit, die in der Regel Wasser ist und eine der jeweiligen Behandlungszone entsprechende Temperatur (nachstehend auch als "Sprühtemperatur" bezeichnet) aufweist. Das Abkühlen der Behälter und damit des Produktes nach dem Pasteurisieren erfolgt durch Beaufschlagung der Behälter mit einem Kühlmedium, d.h. üblicherweise durch Besprühen der Behälter mit einer Sprühflüssigkeit, die wiederum in der Regel Wasser ist und in jeder Behandlungszone des Abkühlabschnittes eine der Temperatur dieser Zone entsprechende Sprühtemperatur aufweist.

Durch eine entsprechende Prozesssteuerung kann der Energieverbrauch einer Pasteurisieranlage minimiert werden, und zwar insbesondere auch dadurch, dass die in den Behandlungszonen des Abkühlabschnittes anfallende und Wärmeenergie der abgekühlten Behälter beinhaltende Sprühflüssigkeit z.B. nach zusätzlicher Erwärmung an den Aufhelzbereich zurückgeführt und dort zum Aufheizen der Behälter verwendet wird. Bevorzugt erfolgt dies derart, dass die in einer Behandlungszone des Abkühlbereichs anfallende Sprühflüssigkeit jeweils in einer Behandlungszone des Aufheizbereichs verwendet wird, die (Behandlungszone des Aufheizbereichs) die geringste Temperaturdifferenz zu der betreffenden Behandlungszone des Abkühlbereiche aufweist. Jeder Behandlungszone des Abkühlbereichs ist dann wenigstens eine Behandlungszone des Aufheizbereichs oder umgekehrt zugeordnet. Das zusätzliche Aufheizen erfolgt dabei beispielsweise durch Zumischen von heißer Sprühflüssigkeit aus einer Behandlungszone mit jeweils höherer Sprühtemperatur.

Produktions- oder Abfüllanlagen zum Abfüllen von Produkten, insbesondere auch von Getränken, in Behälter verfügen häufig zusätzlich zu der Pasteurisieranlage oder -vorrichtung und einer Füll- und Verschließmaschine auch über einen der Behälterfüllmaschine vorausgehenden Rinser, in welchem die Behälter unmittelbar vor ihrem Eintritt in die Füll- und Verschließmaschine nochmals mit Frischwasser gespült bzw. gereinigt werden. Die Verwendung derartiger Rinser ist beispielsweise In Abfüllaniagen für Getränke insbesondere bei Verwendung von Einwegverpackungen oder -behältern üblich. Bisher wird das bei dieser Reinigung anfallende, aus den gereinigten Behältern laufende Spülwasser als Abwasser verworfen, obwohl es sich hierbei um hochwertiges Wasser mit einer Temperatur zwischen 10°C und 15°C handelt. Hinsichtlich Temperatur und Qualität entspricht das Abwasser des Rinsers im Wesentlichen dem, einer Pasteurisationsanlage zugeführtem Frischwasser, bzw. den an dieses Frischwasser gestellten Qualitätsanforderungen.

Bekannt ist eine Anlage zum Abfüllen von Milch in Flaschen, bei der die verschlossenen Flaschen zur Stabilisierung durch eine Pasteurisieranlage transportiert werden, in der u.a. ein Erhitzen der Flaschen durch Übersprühen mit heißem Wasser erfolgt (GB 363 033 A). Das Abwasser der Pasteurisieranlage wird entweder einer Vorreinigungsstrecke für die Flaschen zugeführt oder aber an einen Heiztank geleitet, aus dem das Abwasser nach einem Erhitzen für ein Aufheizen der Milch verwendet wird, bevor diese in die Flaschen eingebracht wird.

Bekannt sind weiterhin Tunnelpasteurisieranlagen von gefüllten und verschlossenen Behältern (US 6 374 575 B1, US 2002/073652 A1), die zum Pasteurisieren durch mehrere Behandlungszonen mit unterschiedlicher Behandlungstemperatur bewegt werden Für ein optimales Energiemanagement wird das in einigen Behandlungszonen anfallende Abwasser eventuell unter Zwischenspeicherung in einem Pufferspeicher als Behandlungsmedium in anderen Behandlungszonen verwendet.

Aufgabe der Erfindung ist es, ein Verfahren aufzuzeigen, mit dem der Energie- und Wasserverbrauch bei einer Abfüllanlage mit einem der Füll- und Verschließmaschine vorausgehenden Rinser und einer nachfolgenden Pasteurisieranlage wesentlich reduziert werden kann. Zur Lösung dieser Aufgabe ist ein Verfahren entsprechend dem Patentanspruch 1 ausgebildet. Eine Füllanlage zum Durchführen dieses Verfahrens ist Gegenstand des Patentanspruchs 12.

Mit dem erfindungsgemäßen Verfahren wird die vergleichsweise geringe innere Energie (Enthalpie) des gesamten oder aber auch eines Teils am Rinser anfallenden Abwassers in der Pasteurisieranlage genutzt, und zwar beispielsweise als Kühlmedium in wenigstens einer Behandlungszone der Pasteurisationsanlage, beispielsweise innerhalb des Abkühlbereichs. Hierfür wird das am Rinser aufgefangene Abwasser zumindest zum Teil direkt als Sprühwasser zum Behandeln der Behälter, insbesondere zur Abkühlung der Behälter verwendet und hierfür beispielsweise in eine ohnehin vorhandene Sammelkammer der Pasteurisieranlage geleitet bzw. einer dort vorhandenen Sprühflüssigkeit kontinuierlich oder gesteuert zugegeben. Weiterhin besteht auch die Möglichkeit, das am Rinser anfallende Abwasser an einen beispielsweise in der Pasteurisieranlagen vorgesehenen oder in der Nähe der Pasteurisieranlage vorgesehenen Pufferspeicher zu leiten, in dem dieses Abwasser als Kühlmedium zur Kühlung beispielsweise der letzten Behandlungszone des Abkühlabschnittes zur Verfügung steht und aus dem es vorzugsweise gesteuert der Sprühflüssigkeit der betreffenden Behandlungszone beigemischt wird.

Weiterhin besteht auch die Möglichkeit, dass das Abwasser aus dem Pufferspeicher direkt, d.h. ohne ein Beimischen als Sprühflüssigkeit in der betreffenden Behandlungszone verwendet wird. Speziell bei dieser Ausführungsform ist auch eine erhebliche Verkürzung des Abkühlabschnittes der Pasteurisieranlage möglich, zumal das Abwasser des Rinsers in der Regel eine sehr niedrige Temperatur, d.h. eine Temperatur unterhalb der Sprühtemperatur der letzten Behandlungszone des Abkühlabschnittes aufweist. Durch die Verkürzung des Abkühlabschnittes ergibt sich dann auch eine wesentliche Verringerung der Größe der Pasteurisieranlage.

Grundsätzlich besteht weiterhin die Möglichkeit, die innere Energie des am Rinser anfallenden Abwassers beispielsweise zur Kühlung einer Behandlungszone der Pasteurisieranlage bzw. des dieser Behandlungszone zugeführten Sprühflüssigkeit unter Verwendung eines Wärmetauschers zu nutzen, der von dieser Sprühflüssigkeit sowie auch von dem Abwasser des Rinsers durchströmt, beispielsweise gesteuert durchströmt wird. Auch bei dieser Ausführungsform ist es möglich, das Abwasser des Rinsers zunächst einem Pufferspeicher zuzuführen, aus dem dann die Abgabe an den Wärmetauscher erfolgt.

Zusätzlich besteht weiterhin die Möglichkeit, das Abwasser des Rinsers zum Aufwärmen der zu pasteurisierenden Behälter zu verwenden. Bei bestimmten Anwendungsfällen, z.B. bei der Abfüllung von Bier weisen die Behälter beim Erreichen der Pasteurisationsanlage eine Temperatur von 5 bis 9°C auf. Da die Temperatur des Rinserabwassers ca. 10- 15 °C beträgt, kann dieses in geeigneter Weise den Aufwärmzonen der Pasteurisationsanlage zugeführt werden

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in schematischer Funktionsdarstellung eine Pasteurisiervorrichtung oder -anlage zum Pasteurisieren von in Flaschen oder dergl. Behälter abgefüllten Produkten;
- Fig. 2: eine schematische Funktionsdarstellung einer Füllanlage zum Füllen von Behältern mit einem flüssigen Füllgut oder Produkt und zum Pasteurisieren der gefüllten und verschlossenen Behälter;
- Fig. 3: eine Darstellung wie Figur 2, jedoch bei einer weiteren Ausführungsform der Erfindung.

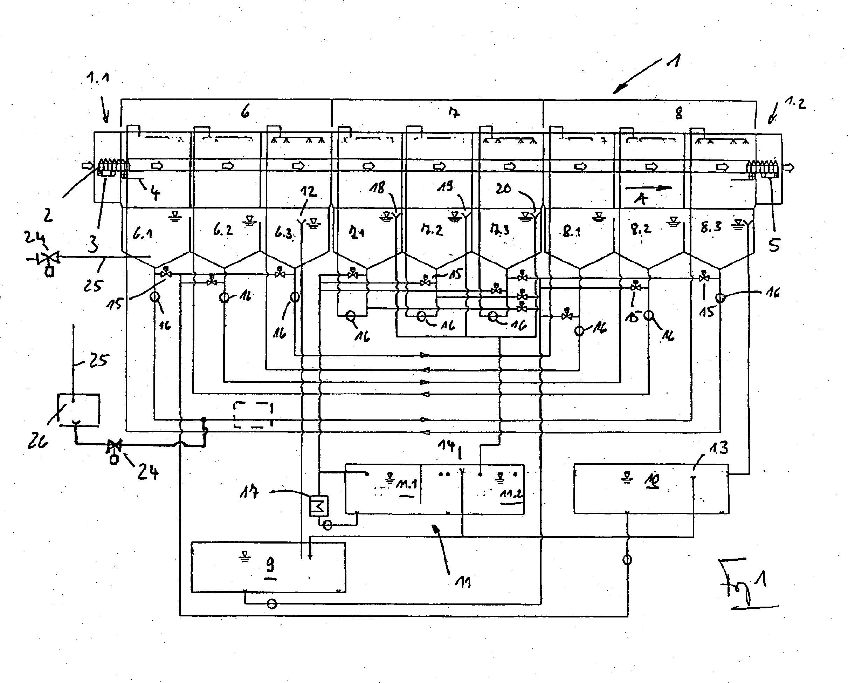

Die in der Figur 1 allgemein mit 1 bezeichnete Pasteurisieranlage dient zur Hitzebehandlung, d.h. zum Pasteurisieren eines in Flaschen 2 abgefüllten flüssigen Produktes. Die Flaschen 2 werden nach dem Füllen und Verschließen über einen Transporteur 3 aufrecht stehend dem Behältereinlass 1.1 der als Tunnelpasteur ausgebildeten Pasteurisieranlage 1 zugeführt und auf einem vorrichtungsinternen Transporteur 4 weiterhin aufrecht stehend durch die verschiedenen Behandlungszonen dieser Anlage an deren Auslass 1.2 bewegt (Pfeil A), von dem die pasteurisierten Flaschen 2 dann über einen externen Transporteur 5 einer weiteren Verwendung, beispielsweise einer Etikettiermaschine zugeführt werden.

Die Pasteurisieranlage 1 umfasst bei der dargestellten Ausführungsform drei Behandlungsabschnitte, und zwar einen Aufheizabschnitt 6, einen Überhitzungs- und Pasteurisierabschnitt 7 und einen Abkühlabschnitt 8, die dieser Reihenfolge in der Transportrichtung A des Transporteurs 4 aneinander anschließen. Jeder Behandlungsabschnitt 6 - 8 ist bei der dargestellten Ausführungsform seinerseits in drei in Transportrichtung A aneinander anschließende Behandlungszonen unterteilt, und zwar der Aufheizabschnitt 6 in die Behandlungszonen 6.1, 6.2 und 6.3, der Überhitzungsabschnitt 7 in die Behandlungszonen 7.1, 7.2 und 7.3 und der Behandlungsabschnitt 8 in die Behandlungszonen 8.1, 8.2, 8.3, wobei diese Behandlungszonen wiederum mit steigender Bezugsziffer in Transportrichtung A aneinander anschließen.

Konstruktiv sind die einzelnen Behandlungszonen in sofern identisch aufgebaut, als die Wärmeübertragung auf die Flaschen 2 und damit auf das in diesen enthaltende Produkt oder Füllgut durch Besprühen mit einem flüssigen, wärmetransportierenden Medium, d.h. mit einer Sprühflüssigkeit, beispielsweise mit Wasser erfolgt, welches jeweils oberhalb des Transporteurs 4 aus einer Sprühanordnung ausgebracht und unterhalb des Transporteurs 4 in einer Auffangwanne oder in einem Sammelraum der jeweiligen Behandlungszone gesammelt wird.

Die Sammelräume der Behandlungszonen 6.1 und 6.2 sind über einen Überlauf miteinander sowie über einen weiteren Überlauf auch mit dem Sammelraum der Behandlungszone 6.3 verbunden. In analoger Weise sind die Sammelräume 8.1 und 8.2 über einen Überlauf miteinander sowie über einen weiteren Überlauf mit dem Sammelraum der Behandlungszone 8.3 verbunden.

Die Behandlungszonen 7.1 - 7.3 sind bei der dargestellten Ausführungsform jeweils mit einer eigenen Pumpe 16 ausgebildet, die während des Betriebes der Pasteurisieranlage 1 als Umwälzpumpe das heiße Wasser aus dem Sammelraum der jeweiligen Behandlungszone an die Sprührichtung fördert.

Durch die verschiedenen Behandlungsabschnitte 6, 7 und 8 sowie insbesondere auch durch die Unterteilung dieser Abschnitte in die Behandlungszonen ist ein allmähliches Aufheizen der Flaschen 2 von einer Umgebungstemperatur auf die Überhitzung- bzw. Pasteurisiertemperatur unterhalb 100°C und ein anschließendes allmähliches Abkühlen auf die Umgebungstemperatur möglich, sodass insbesondere auch eine Zerstörung der Flaschen 2 durch zu abrupte Temperaturänderungen oder -sprünge vermieden ist.

Die Pasteurisieranlage 1 weist weiterhin Sammelbehälter 9, 10 und 11 auf, von denen der Sammelbehälter 11 in zwei Kammern 11.1 und 11.2 unterteilt ist und der Sammelbehälter 9 mit einem Überlauf 9 in der Sammelkammer der Behandlungszone 6.3, mit einem Überlauf 13 im Sammelbehälter 10 sowie mit einem Überlauf 14 in der Kammer 11.2 des Sammelbehälters 11 verbunden ist.

Unter Verwendung eines eine Vielzahl von Steuerventilen 15 und Pumpen 16 sowie unter Verwendung eines eine dem Sammelbehälter 11 zugeordnete Aufheizeinrichtung 17 aufweisenden und die einzelnen Behandlungszonen bzw. deren Sprüheinrichtungen und Sammelräume mit einander sowie auch mit den Sammelbehältern 9, 10, 11 verbindenden Leitungssystems wird die Pasteurisieranlage 1 nach einem Betriebsprogramm gesteuert, welches für optimale Bedingungen hinsichtlich des Pasteurisierungsergebnisses sowie auch hinsichtlich der Wärmebilanz ausgelegt ist. Um dies zu erreichen erfolgt das Besprühen der Flaschen 2 in den Behandlungszonen 6.1, 6.2 und 6.3 jeweils mit einer Behandlungs- und Sprühflüssigkeit, die aus einer jeweils zugeordneten Behandlungszone 8.1 - 8.3 des Abkühlabschnittes 8 stammt. Die Sprühtemperatur, d.h. die Temperatur der Sprühflüssigkeit der Behandlungszonen 6.1 - 6.3 liegt jeweils etwas höher als die Sprühtemperatur der zugeordneten Behandlungszone 8.1 - 8.3, wobei diese Temperaturdifferenz allerdings gering ist und nur wenige Grad beträgt und durch Zugabe von Behandlungsflüssigkeit aus dem Sammelbehälter 9 ausgeglichen wird. Im Detail sind der Behandlungszone 6.1 die Behandlungszone 8.3, der Behandlungszone 6.2 die Behandlungszone 8.2 und der Behandlungszone 6.3 die Behandlungszone 8.1 zugeordnet.

Die Behandlungs- oder Sprühflüssigkeit in dem Sammelbehälter 9 besitzt eine für diesen Temperaturausgleich ausreichend hohe Temperatur, da der Sammelbehälter 9 u.a. über den Überlauf 12 mit dem Sammelraum der Behandlungszone 6.3 sowie über den Überlauf 14 mit der Kammer 11.2 des Sammelbehälters 11 in Verbindung steht, die (Kammer 11.2) ihrerseits mit Überläufen 18, 19 und 20 in den Sammelräumen der Behandlungszonen 7.1 - 7.3 verbunden ist.

Die Sprühtemperatur der Behandlungszone 6.1 beträgt beispielsweise 18°C und zwar bei einer Sprühungstemperatur von etwa 17°C in der Behandlungszone 8.3. Die Sprühungstemperatur der anschließenden Behandlungszone 6.2 liegt dann z.B. geringfügig oberhalb von 24°C, und zwar bei einer Sprühungstemperatur der zugeordneten Behandlungszone 8.2 von etwa 23°C. Die Sprühungstemperatur der anschließenden Behandlungszone 6.3 liegt deutlich höher, beispielsweise bei wenigstens 30 - 35°C, und zwar bei einer Sprühungstemperatur der zugeordneten Behandlungszone 8.3 geringfügig unterhalb dieser Temperatur.

Im Anschluss an das Aufwärmen der Flaschen 2 im Aufwärmabschnitt 6 erfolgt das Behandeln bzw. Besprühen der Flaschen 2 im Überhitzungs- oder Pasteurisierungsabschnitt 7 bzw. in dessen Behandlungszonen 7.1 - 7.3 mit einer Sprühungstemperatur, die deutlich über der Temperatur der Behandlungszone 6.3 liegt und mit der unter Berücksichtigung der Verweildauer der Flaschen 2 im Überhitzungs- oder Pasteurisierungsabschnitt 7 der erforderlichen Pasteurisierungsgrad erreicht wird. Hierfür werden die Behandlungszonen 7.1 - 7.3 über die Aufheizeinrichtung 17 aus der Kammer 11.1 mit Wasser versorgt, das u.a. durch diese Aufheizeinrichtung 17 auf der für das Pasteurisieren notwendigen Temperatur deutlich über der Temperatur des Sammelbehälters 9 gehalten wird. Das von den Behandlungszonen 7.1 - 7.3 rückgeführte heiße Wasser wird in der Behandlungszone 11.2 gesammelt und mit dem heißen Wasser der Kammer 11.1 vermischt.

Beim Auftreten einer Störung, beispielsweise verursacht durch einen Behälterrückstau in der Pasteurisieranlage 1 oder in einer diese Pasteurisieranlage aufweisenden Anlage wird durch eine nicht dargestellte Steuereinrichtung eine sofortige, gezielte Ansteuerung bestimmter Steuerventile 15 veranlasst, sodass beispielsweise das Wasser geringerer Temperatur aus dem Behälter 9 den Behandlungszonen 7.1 - 7.3 bzw. deren Sammelräumen zugeführt wird. Auch den übrigen Behandlungszonen 6.1 - 6.3 und/oder 8.1 - 8.3 kann dann Wasser geringerer Temperatur beispielsweise aus dem Sammelbehälter 10 durch Ansteuerung weiterer Steuerventile 15 zugegeben werden.

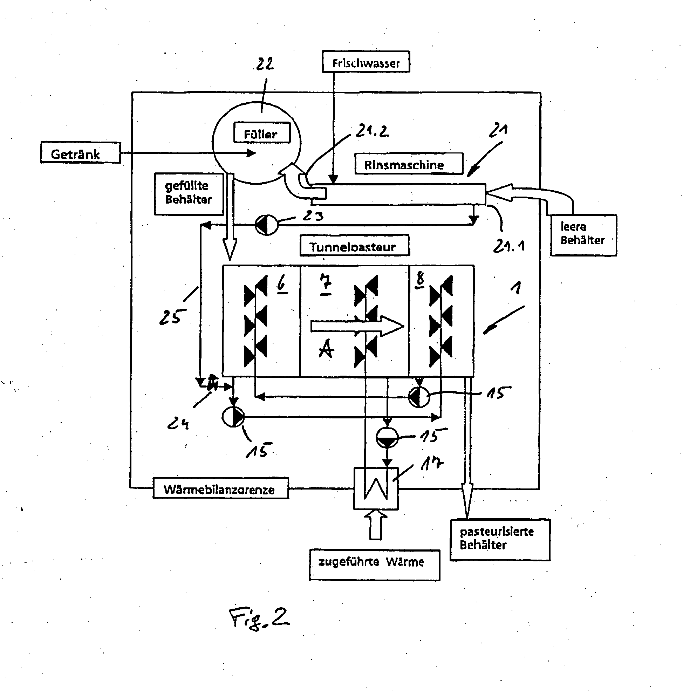

Die Figur 2 zeigt schematisch eine Füllanlage zum Füllen, Verschließen und Pasteurisieren der Flaschen 2. Die Anlage umfasst zusätzlich zu der Pasteurisieranlage 1, die in der vorbeschriebenen Weise ausgebildet ist, eine Behälter- oder Flaschenreinigungsmaschine in Form eines Rinsers 21 (Rinsermaschine), dem eine Füll- oder Verschließmaschine 22 nachgeschaltet ist. Der Rinser 21 sowie die Füll- und Verschließmaschine 22 weisen beispielsweise die dem Fachmann bekannte Ausbildung auf. Die Füll- und Verschließmaschine 22 besteht dabei z.B. aus zwei zu einem Block zusammengefassten Maschinen oder aber aus zwei Einzelmaschinen. Weiterhin können der Rinser 21 und die Füll- und Verschließmaschine 22 ebenfalls zu einem Block oder einer kombinierten Maschine zusammengefasst sein.

Die noch leeren Flaschen 2 werden dem Rinser 21 an einem Behältereinlauf 21.1 zugeführt und nach der Reinigung bzw. nach dem Spülen mit Frischwasser und dem Abtropfen von Restwasser am Behälterauslauf 21.2 an die Füll- und Verschließmaschine 22 weitergeleitet, in der die gereinigten Flaschen 2 befüllt und anschließend verschlossen werden, bevor sie dem Behältereinlauf 1.1 der Pasteurisieranlage 1 zugeführt werden.

Die Besonderheit der in der Figur 2 dargestellten Anlage besteht nun darin, dass das Abwasser des Rinsers 21, welches praktisch Frischwasser ist, der Pasteurisationsanlage zugeführt wird, wo es beispielsweise in geeigneter Weise zur Kühlung oder zur zusätzlichen Kühlung des Pasteurisierungsprozesses verwendet wird und hierfür über eine eine Pumpe 23 und ein Steuerventil 24 aufweisende Verbindung oder Leitung 25 beispielsweise einem Sammelbehälter oder -raum zugeführt wird, aus welchem beispielsweise die Behandlungszone 8.3 oder deren Sprüheinrichtung mit Sprühwasser versorgt werden. Dabei ist ebenfalls zu beachten, dass dieses der Pasteurisationsanlage zugeführte Rinserabwasser innerhalb der Pasteurisationsanlage auch unabhängig von dessen Temperatur bzw. Enthalpie lediglich als Frischwasserersatz dienen kann. Auch während des normalen, störungsfreien Betriebes weisen Pasteurisationsanlagen einen permanenten Bedarf an Fischwasser auf, da ein Teil des innerhalb der Pasteurisationsanlage vorhandenen Prozesswassers durch die behandelten Behälter verschleppt wird.

Bei der im Zusammenhang mit der Figur 1 beschriebenen Pasteurisieranlage 1 ist dieser Sammelraum z.B. der Sammelraum der Behandlungszone 6.1 oder aber ein zusätzlicher, z.B. mit der Sprüheinrichtung der Behandlungszone 8.3 verbundener oder verbindbarer Sammelbehälter.

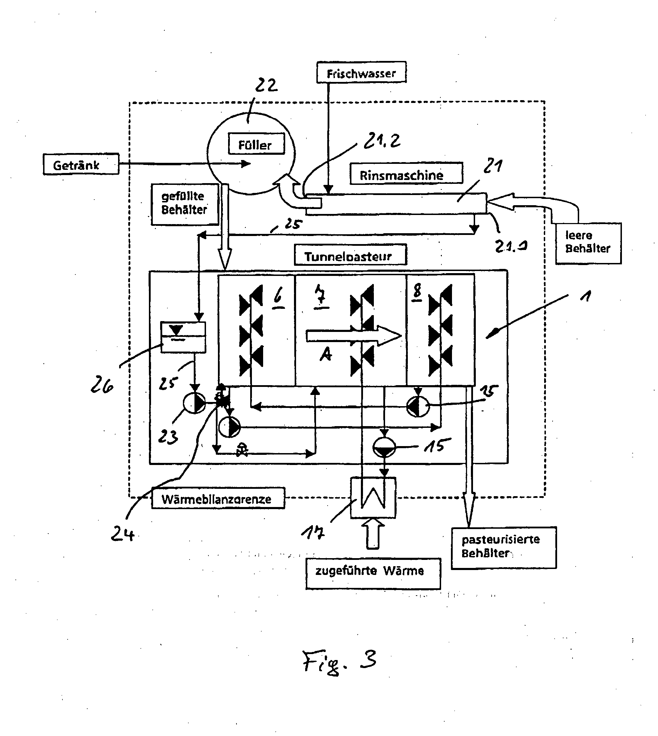

Die Figur 3 zeigt eine Anlage, die sich von der Anlage der Figur 2 im Wesentlichen nur dadurch unterscheidet, dass das Abwasser des Rinsers 21 zunächst beispielsweise unter Ausnutzung des hydrostatischen Druckes einem Pufferspeicher 26 zufließt und dort gespeichert wird. Der Pufferspeicher 26 ist dann z.B. Bestandteil der Pasteurisieranlage 1, wie die in der Fig. angedeutet ist. Aus dem Pufferspeicher 25 wird das Wasser gesteuert durch eine nicht dargestellte Steuereinrichtung zur Kühlung einer von der Temperatur her passenden Behandlungszone 8.1 - 8.3 der Pasteurisieranlage 1 eingesetzt, beispielsweise der Behandlungszone 8.3. Es besteht hierbei auch die Möglichkeit, dass das Sprühwasser der Behandlungszone ausschließlich von dem Wasser aus dem Pufferspeicher 26 gebildet ist, die entsprechende Behandlungszone, beispielsweise die Behandlungszone 8.3 also ausschließlich aus dem Pufferspeicher 26 gespeist wird.

Überschüssiges Wasser, insbesondere solches, welches aus der Zuleitung des Abwassers des Rinsers 21 herrührt und mengenmäßig die Pufferkapazität der Pasteurisieranlage 1 und/oder des Pufferspeichers 26 übersteigt, kann dann die Pasteurisieranlage 1 je nach Bedarf an unterschiedlichen Bereichen auch mit entsprechend erhöhtem Temperaturniveau wieder verlassen.

Wie in der Figur 1 mit 27 angedeutet, besteht auch die Möglichkeit, das Abwasser des Rinsers 21 einem Wärmetauscher der Pasteurisieranlage 1 zuzuführen, in welchem das beispielsweise der Behandlungszone 8.3 zugeführte Spritzwasser zusätzlich gekühlt wird.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

Insbesondere fallen auch Verfahren und Vorrichtungen in den Umfang der vorliegenden Erfindung, bei welchem zwischengespeichertes Rinserabwasser bei bestimmten Betriebssituationen der Pasteurisationsanlage vorzugsweise geregelt oder gesteuert zugeführt wird.

Da die im Inneren der Pasteurisationsanlage befindliche Sprühflüssigkeit mit Chemikalien, beispielsweise Säure, versetzt wurde, ist es üblich, die bereits pasteurisierten Behälter abschließend mit Frischwasser abzuspülen, um eventuell an den Behältern anhaftende Chemikalien sicher entfernen zu können. Erfindungsgemäß wird vorgeschlagen, die zum Abspülen erforderliche Frischwassermenge zumindest teilweise durch Rinserabwasser zu ersetzen.

Auch im normalen Betriebsablauf einer Pasteurisationsanlage kann es je nach der Störungsanfälligkeit der nachgeschalteten Maschinen oder Anlagen mehr oder weniger häufig zu kurzzeitigen Stoppphasen kommen. Während dieser Stoppphasen ist es zwingend erforderlich, die im Inneren der Pasteurisationsanlage befindlichen, auf Pasteurisationstemperatur erwärmten Behältnisse zu kühlen, um ein Verkochen des Produktes zu vermeiden. Der Frischwasserbedarf in einer solchen Betriebssituation beträgt beispielsweise 2-3 m³. Erfindungsgemäß wird vorgeschlagen, diese Frischwassermenge zumindest teilweise durch Rinserabwasser zu ersetzen.

Einen besonderer Betriebszustand stellt das Leerfahren einer Pasteurisationsanlage dar, da in diesem Betriebszustand die zur Abkühlung der pasteurisierten Behälter erforderliche Wärmebedarf bzw. die Kühllast der aufzuwärmenden, noch zu pasteurisierenden Behälter fehlt. Bei ausgeführten Anlagen entsteht durch das Leerfahren ein Frischwasserbedarf von etwa 20 - 30m³, wodurch eine nicht unerhebliche Kostenbelastung entsteht. Erfindungsgemäß wird vorgeschlagen, die für das Leerfahren erforderliche Frischwassermenge zumindest teilweise durch Rinserabwasser zu ersetzen.

### Bezugszeichenliste

- 1: Pasteurisieranlage oder -vorrichtung
- 1.1: Behältereinlauf
- 1.2: Behälterauslauf
- 2: Flasche oder Behälter
- 3, 4, 5: Transporteur
- 6: Aufheizabschnitt
- 6.1, 6.2, 6.3: Aufheiz- oder Behandlungszone
- 7: Pasteurisierabschnitt
- 7.1, 7.2, 7.3: Pasteurisier- oder Behandlungszone
- 8: Abkühlabschnitt
- 8.1, 8.2, 8.3: Abkühl- oder Behandlungszone
- 9, 10, 11: Sammelbehälter
- 11.1, 11.2: Kammern
- 12, 13, 14: Überlauf
- 15: Steuerventil
- 16: Pumpe
- 17: Aufheizeinrichtung
- 18, 19, 20: Überlauf
- 21: Rinser
- 21.1: Behältereinlauf
- 21.2: Behälterauslauf
- 22: Füll- und Verschließmaschine
- 23: Pumpe
- 24: Steuerventil
- 25: Leitung
- 26: Pufferspeicher
- 27: Wärmetauscher

- A: Transportrichtung

## Patentansprüche

1. Verfahren zur Reduzierung des Energie- und/oder Frischwasserbedarfs bei Pasteurisieranlagen (1) zum Pasteurisieren von mit einem flüssigen Füllgut gefüllten und verschlossenen Flaschen oder dergleichen Behälter (2), wobei die Behälter (2) vor dem Füllen in einer Reinigungs- und/oder Spülmaschine, beispielsweise Rinser (21), zumindest mit Wasser behandelt und während des Pasteurisierens erhitzt und anschließend abgekühlt werden, **dadurch gekennzeichnet, dass** an einem Auslass der Reinigungs- und/oder Spülmaschine anfallendes Abwasser der Pasteurisieranlage (1) zum Pasteurisieren von mit einem flüssigen Füllgut gefüllten und verschlossenen Flaschen oder dergleichen Behälter (2) zur Nutzung der inneren Energie dieses Abwassers und/oder des Abwassers selbst zugeführt wird.

2. Verfahren nach Anspruch 1, **dadurch gekennzeichnet, dass** das Abwasser der Reinigungs- und/oder Spülmaschine zum Kühlen oder zusätzlichen Kühlen der Behälter (2) am Ende des Pasteurisierens öder aber zum Erwärmen der Behälter (2) am Anfang des Pasteurisierens verwendet wird.

3. Verfahren nach Anspruch 1 oder 2, **dadurch gekennzeichnet, dass** die Pasteurisieranlage (1) einen Kühlabschnitt mit wenigstens einer Abkühlzone (8.1, 8.2, 8.3) aufweist, und dass das Abwasser der Reinigungs- und/oder Spülmaschine zum Kühlen oder zusätzlichen Kühlen des auf die Behälter ausgebrachten Spritzwassers dieser Zone verwendet wird.

4. Verfahren nach einem der vorhergehenden Ansprüche, **dadurch gekennzeichnet, dass** das Abwasser der Reinigungs- und/oder Spülmaschine Frischwasser oder im Wesentlichen Frischwasser ist.

5. Verfahren nach Anspruch 4, **dadurch gekennzeichnet**, das Abwasser der Reinigungs- und/oder Spülmaschine zumindest teilweise als Sprühwasser zur Kühlung auf die Behälter (2) aufgebracht wird.

6. Verfahren nach Anspruch 4, **dadurch gekennzeichnet, dass** zumindest in einer Behandlungszone (8.1, 8.2, 8.3) der Pasteurisieranlage (1), beispielsweise in wenigstens einer Kühlzone, das Abwasser der Reinigungs- und/oder Spülmaschine einem dort verwendeten Spritzwasser beigemischt wird.

7. Verfahren nach Anspruch 4, **dadurch gekennzeichnet, dass** zumindest in einer Behandlungszone (8.1, 8.2, 8.3) der Pasteurisieranlage (1), beispielsweise in wenigstens einer Kühlzone, ausschließlich das Abwasser der Reinigungs-und/oder Spülmaschine als Spritzwasser verwendet wird.

8. Verfahren nach einem der vorhergehenden Ansprüche, **dadurch gekennzeichnet, dass** das Abwasser der Reinigungs- und/oder Spülmaschine in einem Pufferspeicher (26), vorzugsweise in einem Pufferspeicher der Pasteurisierungsvorrichtung (1) gespeichert und aus diesem Pufferspeicher (26) für die Kühlung oder zusätzliche Kühlung des Pasteurisierungsprozesses verwendet wird.

9. Verfahren nach einem der vorhergehenden Ansprüche, **dadurch gekennzeichnet, dass** das Abwasser der Reinigungs- und/oder Spülmaschine und/oder aus dem Pufferspeicher (26) kontinuierlich oder aber gesteuert der Pasteurisiervorrichtung als Kühlmedium zugeführt wird.

10. Verfahren nach einem der vorhergehenden Ansprüche, **dadurch gekennzeichnet, dass** das, der Pasteurisationsvorrichtung (1) während einer Stoppphase zugeführte Kühlwasser zumindest teilweise aus Abwasser der Reinigungs- und/oder Spülmaschine besteht.

11. Verfahren nach einem der vorhergehenden Ansprüche, **dadurch gekennzeichnet, dass** das, der Pasteurisationsvorrichtung (1) während des Leerfahrens zugeführte Kühlwasser zumindest teilweise aus Abwasser der Reinigungs- und/oder Spülmaschine besteht.

12. Füllanlage zum Füllen von Flaschen oder dergleichen Behälter (2) mit einem flüssigen Füllgut und zum anschließenden Pasteurisieren der gefüllten und verschlossenen Behälter (2), wobei die Behälter (2) vor dem Füllen in einer Reinigungs- und/oder Spülmaschine, beispielsweise Rinser (21), zumindest mit Wasser behandelt und in einer Pasteurisieranlage (1) während des Pasteurisierens erhitzt und anschließend abgekühlt werden, mit Mitteln (23, 24, 25, 26) zum Sammeln und Weiterleiten von Abwasser der Reinigungs- und/oder Spülmaschine zur Nutzung der inneren Energie dieses Abwassers und/oder des Abwassers selbst, **dadurch gekennzeichnet, dass** die Mitteln (23, 24, 25, 26) für das Weiterleiten des Abwassers der Reinigungs- und/oder Spülmaschine an die Pasteurisieranlage (1) zur dortigen Nutzung der inneren Energie dieses Abwassers und/oder des Abwassers selbst ausgebildet sind.

13. Füllanlage nach Anspruch 12, **dadurch gekennzeichnet, dass** das Abwasser der Reinigungs- und/oder Spülmaschine der Pasteurisieranlage (1) zur Kühlung oder zusätzlichen Kühlung zugeführt wird.

14. Füllanlage nach Anspruch 12 oder 13, **dadurch gekennzeichnet, dass** ein Abwasserauslauf der Reinigungs- und/oder Spülmaschine über eine vorzugsweise gesteuerte Verbindung (25) mit einem Sammelraum oder einer Sammelkammer (26) verbunden ist, aus der wenigstens eine Behandlungszone der Pasteurisieranlage (1), beispielsweise eine Behandlungszone eines Abkühlabschnittes (8) gespeist wird.

15. Füllanlage nach einem der vorhergehenden Ansprüche, **dadurch gekennzeichnet, dass** ein Abwasserauslauf der Reinigungs- und/oder Spülmaschine mit einem Pufferspeicher (26) verbunden ist, der über eine gesteuerte Verbindung an die Pasteurisieranlage (1) oder wenigstens einen Sammelraum oder eine Sammelkammer angeschlossen ist, aus der wenigstens eine Behandlungszone (8.1, 8.2, 8.3) beispielsweise des Abkühlabschnittes der Pasteurisieranlage (1) versorgt wird.

16. Füllanlage nach einem der vorhergehenden Ansprüche, **dadurch gekennzeichnet, dass** ein Abwasserauslauf der Reinigungs- und/oder Spülmaschine mit einem Pufferspeicher (26) verbunden ist, aus dem wenigstens eine Behandlungszone (8.1, 8.2, 8.3) beispielsweise des Abkühlabschnittes der Pasteurisieranlage (1) versorgt wird.

17. Füllanlage nach einem der vorhergehenden Ansprüche, **dadurch gekennzeichnet, dass** ein Abwasserauslauf der Reinigungs- und/oder Spülmaschine mit einem Wärmetauscher der Pasteurisieranlage (1) verbunden ist.

## Claims

1. Method for reducing the power and / or fresh water demand in pasteurisation plants (1) for pasteurising bottles or similar containers (2) which are filled with a liquid filling material and are closed, wherein the containers (2) are treated at least with water in a cleaning and / or rinsing machine, for example a rinser (21), before being filled, and are heated during the pasteurisation and are then cooled, **characterised in that** waste water arising at an outlet of the cleaning and / or rinsing machine is fed to the pasteurisation plant (1) for pasteurising bottles or similar containers (2) which are filled with a liquid filling material and are closed, to use the internal energy of this waste water and / or the waste water itself.

2. Method according to claim 1, **characterised in that** the waste water from the cleaning and / or rinsing machine is used for the cooling or additional cooling of the containers (2) at the end of the pasteurisation or however for heating the containers (2) at the start of the pasteurisation.

3. Method according to claim 1 or 2, **characterised in that** the pasteurisation plant (1) has a cool section with at least one cooling zone (8.1, 8.2, 8.3), and that the waste water from the cleaning and / or rinsing machine is used for the cooling or additional cooling of the spray water in this zone applied onto the containers.

4. Method according to any one of the preceding claims, **characterised in that** the waste water from the cleaning and / or rinsing machine is fresh water or substantially fresh water.

5. Method according to claim 4, **characterised in that** the waste water from the cleaning and / or rinsing machine is at least partially applied onto the containers (2) as spray water used for cooling.

6. Method according to claim 4, **characterised in that** at least in one treatment zone (8.1, 8.2, 8.3) of the pasteurisation plant (1), for example in at least one cooling zone, the waste water from the cleaning and / or rinsing machine is mixed with a spray water used there.

7. Method according to claim 4, **characterised in that** at least in one treatment zone (8.1, 8.2, 8.3) of the pasteurisation plant (1), for example in at least one cooling zone, only the waste water from the cleaning and / or rinsing machine is used as spray water.

8. Method according to any one of the preceding claims, **characterised in that** the waste water from the cleaning and / or rinsing machine is stored in a buffer tank (26), preferably in a buffer tank of the pasteurisation device (1) and from this buffer tank (26) is used for the cooling or additional cooling of the pasteurisation process.

9. Method according to any one of the preceding claims, **characterised in that** the waste water from the cleaning and / or rinsing machine and / or from the buffer tank (26) is fed continuously or however in a controlled manner to the pasteurisation device as a cooling medium.

10. Method according to any one of the preceding claims, **characterised in that** the cooling water fed to the pasteurisation device (1) during a stop phase consists at least partially of waste water from the cleaning and / or rinsing machine.

11. Method according to any one of the preceding claims, **characterised in that** the cooling water fed to the pasteurisation device (1) when it is running empty consists at least partially of waste water from the cleaning and / or rinsing machine.

12. Filling plant for filling bottles or similar containers (2) with a liquid filling material and for subsequently pasteurising the filled and closed containers (2), wherein before being filled, the containers (2) are treated at least with water in a cleaning and / or rinsing machine, for example a rinser (21), and in a pasteurisation plant (1) are heated during the pasteurisation and then cooled, with means (23, 24, 25, 26) for collecting and conveying waste water from the cleaning and / or rinsing machine to use the internal energy of this waste water and / or the waste water itself, **characterised in that** the means (23, 24, 25, 26) are designed to convey the waste water from the cleaning and / or rinsing machine to the pasteurisation plant (1) for the use there of the internal energy of this waste water and / or the waste water itself.

13. Filling plant according to claim 12, **characterised in that** the waste water from the cleaning and / or rinsing machine is fed to the pasteurisation plant (1) for cooling or additional cooling.

14. Filling plant according to claim.12 or 13, **characterised in that** a waste water outlet of the cleaning and / or rinsing machine is connected by means of a preferably controlled connection (25) to a collection space or a collection chamber (26), from which at least one treatment zone of the pasteurisation plant (1), for example a treatment zone of a cooling section (8), is supplied.

15. Filling plant according to any one of the preceding claims, **characterised in that** a waste water outlet of the cleaning and / or rinsing machine is connected to a buffer tank (26), which is connected by means of a controlled connection to the pasteurisation installation (1) or at least a collection space or a collection chamber, from which at least one treatment zone (8.1, 8.2, 8.3), for example of the cooling section of the pasteurisation plant (1), is supplied.

16. Filling plant according to any one of the preceding claims, **characterised in that** a waste water outlet of the cleaning and / or rinsing machine is connected to a buffer tank (26), from which at least one treatment zone (8.1, 8.2, 8.3), for example of the cooling section of the pasteurisation plant (1) is supplied.

17. Filling plant according to any one of the preceding claims, **characterised in that** a waste water outlet of the cleaning and / or rinsing machine is connected to a heat exchanger of the pasteurisation plant (1).

## Revendications

1. Procédé servant à réduire la consommation d'énergie et/ou d'eau fraîche dans des installations de pasteurisation (1) servant à pasteuriser des bouteilles ou contenants (2) similaires remplis d'un produit de remplissage liquide et fermés, sachant que les contenants (2) sont traités au moins avec de l'eau avant le remplissage dans une machine de nettoyage et/ou de rinçage, par exemple une rinceuse (21), et sont chauffés puis immédiatement après refroidis au cours de la pasteurisation, **caractérisé en ce que** les eaux usées provenant d'une évacuation de la machine de nettoyage et/ou de rinçage sont amenées à l'installation de pasteurisation (1) servant à pasteuriser des bouteilles ou des contenants similaires (2) remplis d'un produit de remplissage liquide et fermés afin d'utiliser l'énergie interne desdites eaux usées et/ou des eaux usées elles-mêmes.

2. Procédé selon la revendication 1, **caractérisé en ce que** les eaux usées de la machine de nettoyage et/ou de rinçage sont utilisées afin de refroidir ou de refroidir de manière supplémentaire les contenants (2) à la fin de la pasteurisation ou afin de réchauffer les contenants (2) au début de la pasteurisation.

3. Procédé selon la revendication 1 ou 2, **caractérisé en ce que** l'installation de pasteurisation (1) présente un tronçon de refroidissement comprenant au moins une zone de refroidissement (8.1, 8.2, 8.3), et **en ce que** les eaux usées de la machine de nettoyage et/ou de rinçage sont utilisées afin de refroidir ou de refroidir de manière supplémentaire les projections d'eau sur les contenants de ladite zone.

4. Procédé selon l'une quelconque des revendications précédentes, **caractérisé en ce que** les eaux usées de la machine de nettoyage et/ou de rinçage sont de l'eau fraîche ou essentiellement de l'eau fraîche.

5. Procédé selon la revendication 4, **caractérisé en ce que** les eaux usées de la machine de nettoyage et/ou de rinçage sont appliquées sur les contenants (2) au moins en partie sous la forme de pulvérisations d'eau aux fins du refroidissement.

6. Procédé selon la revendication 4, **caractérisé en ce que** les eaux usées de la machine de nettoyage et/ou de rinçage sont mélangées aux projections d'eau utilisées à cet endroit au moins dans une zone de traitement (8.1, 8.2, 8.3) de l'installation de pasteurisation (1), par exemple dans au moins une zone de refroidissement.

7. Procédé selon la revendication 4, **caractérisé en ce que** les eaux usées de la machine de nettoyage et/ou de rinçage sont exclusivement utilisées sous la forme de projections d'eau au moins dans une zone de traitement (8.1, 8.2, 8.3) de l'installation de pasteurisation (1), par exemple dans au moins une zone de refroidissement.

8. Procédé selon l'une quelconque des revendications précédentes, **caractérisé en ce que** les eaux usées de la machine de nettoyage et/ou de rinçage sont stockées dans un réservoir d'accumulation (26), de préférence dans un réservoir d'accumulation du dispositif de pasteurisation (1) et sont utilisées, depuis ledit réservoir d'accumulation (26), en vue du refroidissement ou du refroidissement supplémentaire du processus de pasteurisation.

9. Procédé selon l'une quelconque des revendications précédentes, **caractérisé en ce que** les eaux usées de la machine de nettoyage et/ou de rinçage et/ou provenant du réservoir d'accumulation (26) sont amenées en continu, toutefois de manière commandée, au dispositif de pasteurisation sous la forme d'un agent de refroidissement.

10. Procédé selon l'une quelconque des revendications précédentes, **caractérisé en ce que** l'eau de refroidissement amenée au dispositif de pasteurisation (1) au cours de la phase d'arrêt est constituée au moins en partie des eaux usées de la machine de nettoyage et/ou de rinçage.

11. Procédé selon l'une quelconque des revendications précédentes, **caractérisé en ce que** l'eau de refroidissement amenée au dispositif de pasteurisation (1) au cours du fonctionnement à vide est constituée au moins en partie des eaux usées de la machine de nettoyage et/ou de rinçage.

12. Installation de remplissage de bouteilles ou de contenants (2) similaires d'un produit de remplissage liquide et servant à pasteuriser par la suite les contenants (2) remplis et fermés, sachant que les contenants (2) sont traités au moins avec de l'eau avant le remplissage dans une machine de nettoyage et/ou de rinçage, par exemple une rinceuse (21), et sont chauffés puis immédiatement après refroidis dans une installation de pasteurisation (1) au cours de la pasteurisation, avec des moyens (23, 24, 25, 26) servant à collecter et à acheminer des eaux usées de la machine de nettoyage et/ou de rinçage afin d'utiliser l'énergie interne desdites eaux usées et/ou des eaux usées elles-mêmes, **caractérisée en ce que** les moyens (23, 24, 25, 26) sont réalisés en vue de l'acheminement des eaux usées de la machine de nettoyage et/ou de rinçage à l'installation de pasteurisation (1) aux fins de l'utilisation à cet endroit de l'énergie interne desdites eaux usées et/ou des eaux usées elles-mêmes.

13. Installation de remplissage selon la revendication 12, **caractérisée en ce que** les eaux usées de la machine de nettoyage et/ou de rinçage sont amenées à l'installation de pasteurisation (1) aux fins du refroidissement ou du refroidissement supplémentaire.

14. Installation de remplissage selon la revendication 12 ou 13, **caractérisée en ce qu'**une évacuation des eaux usées de la machine de nettoyage et/ou de rinçage est reliée, par l'intermédiaire d'un raccord (25) de préférence commandé, à un espace de collecte ou à une chambre de collecte (26), laquelle alimente au moins une zone de traitement de l'installation de pasteurisation (1), par exemple une zone de traitement d'un tronçon de refroidissement (8).

15. Installation de remplissage selon l'une quelconque des revendications précédentes, **caractérisée en ce qu'**une évacuation des eaux usées de la machine de nettoyage et/ou de rinçage est reliée à un réservoir d'accumulation (26), qui est raccordé, par l'intermédiaire d'un raccord commandé, à l'installation de pasteurisation (1) ou au moins à un espace de collecte ou à une chambre de collecte, qui alimente au moins une zone de traitement (8.1, 8.2, 8.3) par exemple du tronçon de refroidissement de l'installation de pasteurisation (1).

16. Installation de remplissage selon l'une quelconque des revendications précédentes, **caractérisée en ce qu'**une évacuation des eaux usées de la machine de nettoyage et/ou de rinçage est reliée à un réservoir d'accumulation (26), lequel alimente au moins une zone de traitement (8.1, 8.2, 8.3) par exemple du tronçon de refroidissement de l'installation de pasteurisation (1).

17. Installation de remplissage selon l'une quelconque des revendications précédentes, **caractérisée en ce qu'**une évacuation des eaux usées de la machine de nettoyage et/ou de rinçage est reliée à un échangeur de chaleur de l'installation de pasteurisation (1).
